# FASCICULE DE BREVET EUROPEEN

(11) **EP 2 494 184 B1**
(45) Date de publication et mention de la délivrance du brevet: **22.08.2018**
(21) Numéro de dépôt: 10785158.6
(22) Date de dépôt: 21.10.2010
(51) Int. Cl.: F02C 7/275, F02N 11/04, H02K 19/14, H02P 1/50, H02K 19/26, H02K 11/042, H02P 9/08, F02N 11/08, H02K 29/03, H02K 7/14

(54) **DEMARREUR-GENERATEUR DE TURBOMACHINE ET PROCEDE POUR SA COMMANDE**
STARTER-GENERATOR EINER TURBOMASCHINE UND ANSTEUERVERFAHREN DAFÜR
STARTER-GENERATOR OF A TURBOMACHINE AND CONTROL METHOD THEREFOR

(30) Priorité: 30.10.2009 FR 0957661
(43) Date de publication de la demande: 05.09.2012
(73) Titulaire: Safran Electrical & Power, 31702 Blagnac Cedex (FR)
(72) Inventeur: DE WERGIFOSSE, Eric, F-77515 Saint Augustin (FR)
(74) Mandataire: Delumeau, François Guy
(86) Numéro de dépôt international: PCT/FR2010/052252
(87) Numéro de publication internationale: WO 2011/051598

(56) Documents cités:
- GB-A- 175 084
- GB-A- 594 342
- US-A- 3 354 368
- US-A- 3 823 357
- US-A- 3 916 229
- US-A- 3 959 702
- US-A- 4 139 807
- US-A- 4 830 412
- US-A- 5 055 700
- US-B1- 6 169 390
- US-B1- 6 992 403

## Description

### Arrière-plan de l'invention

L'invention se rapporte aux démarreurs-générateurs de turbomachines.

Le domaine d'application de l'invention est plus particulièrement celui des démarreurs-générateurs pour des moteurs aéronautiques de propulsion à turbine à gaz ou pour des groupes auxiliaires de puissance ou APU ("Auxiliary Power Unit") à turbine à gaz montés sur des aéronefs. L'invention est toutefois applicable à d'autres types de turbomachines, par exemple des turbines industrielles.

Un tel démarreur-générateur ou S/G ("Starter/Generator") comprend de façon usuelle une machine électrique principale qui forme génératrice électrique principale fonctionnant en mode synchrone après démarrage et allumage de la turbomachine associée. La machine électrique principale possède un inducteur rotorique et des enroulements statoriques qui, en mode génératrice synchrone, fournissent une énergie électrique alternative à un réseau de bord d'un aéronef via une ligne d'alimentation sur laquelle est monté un contacteur de ligne. La tension alternative fournie par la génératrice principale est régulée au moyen d'une unité de régulation générateur ou GCU ("Generator Control Unit") qui alimente en courant continu un inducteur statorique d'une excitatrice dont les enroulements rotoriques sont reliés à l'inducteur rotorique de la machine électrique principale via un redresseur tournant. L'énergie électrique nécessaire à l'alimentation de l'inducteur de l'excitatrice peut être fournie par une génératrice électrique auxiliaire telle qu'une génératrice synchrone à aimants permanents, ou peut être dérivée du réseau électrique de bord de l'aéronef.

Les rotors de la machine électrique principale, de l'excitatrice et de la génératrice auxiliaire éventuelle sont montés sur un arbre commun couplé mécaniquement à un arbre de la turbomachine et constituent un démarreur-générateur à deux ou trois étages fonctionnant sans balais (ou "brushless").

Pour assurer le démarrage de la turbomachine, il est bien connu de faire fonctionner la machine électrique principale en mode moteur électrique synchrone en alimentant ses enroulements statoriques par une tension alternative fournie sur la ligne d'alimentation via le contacteur de ligne et en alimentant l'inducteur rotorique via l'excitatrice. L'arbre du démarreur-générateur étant initialement à l'arrêt, il est nécessaire d'injecter via la GCU une tension alternative dans l'inducteur statorique de l'excitatrice pour développer sur ses enroulements rotoriques une tension alternative qui, après redressement, alimente l'inducteur rotorique de la machine électrique principale.

Pour pouvoir injecter la tension alternative requise afin de produire le couple requis au démarrage, la GCU doit être conçue et dimensionnée bien au-delà de ce qui est nécessaire pour alimenter l'excitatrice en courant continu en mode générateur.

Pour remédier à cet inconvénient, il a été proposé dans le document GB 2 443 032 de modifier l'excitatrice pour fonctionner en mode transformateur tournant afin de fournir le courant d'excitation de l'inducteur rotorique de la machine électrique principale lorsqu'elle fonctionne au démarrage en mode synchrone. Cette modification ainsi que la nécessité de faire passer une puissance élevée par le stator de l'excitatrice au démarrage à faible vitesse font qu'une telle solution présente l'inconvénient d'un surcroît de masse et d'encombrement.

Il a aussi été proposé d'assurer le démarrage en faisant fonctionner la machine électrique principale en mode moteur asynchrone plutôt qu'en mode moteur synchrone. On pourra se référer aux documents US 5 055 700, US 6 844 707 et EP 2 025 926. Dans le document US 5 055 700, au démarrage, des enroulements statoriques de la machine électrique principale sont alimentés en tension alternative, via un contacteur de démarrage, au moyen d'un circuit onduleur piloté avec un rapport tension sur fréquence constant. Le rotor de la machine électrique principale est muni de barres d'amortissement qui forment une "cage d'écureuil", permettant la mise en rotation du rotor tandis que l'inducteur rotorique de la machine principale est périodiquement mis en court-circuit au moyen d'un interrupteur particulier pour éviter des surtensions dommageables. Dans le document US 6 844 707, au démarrage, des enroulements statoriques de la machine électrique principale sont également alimentés en tension alternative, via un contacteur de démarrage, au moyen d'un circuit onduleur piloté en tension et en fréquence. L'inducteur rotorique de la machine principale est mis en court-circuit par un interrupteur particulier initialement fermé. La mise en court-circuit de l'inducteur rotorique permet la mise en rotation du rotor en association avec des barres d'amortissement associées à l'inducteur rotorique et formant une "cage d'écureuil" partielle. L'ouverture de l'interrupteur de court-circuit est commandée par le courant issu des enroulements rotoriques de l'excitatrice lors du passage du démarreur-générateur en mode générateur électrique. Le document EP 2 025 926 décrit également un fonctionnement de la machine électrique principale en mode moteur asynchrone au démarrage, le couple de démarrage étant assuré par mise de l'inducteur rotorique en circuit fermé en série avec une résistance au moyen d'un interrupteur avec assistance éventuelle de barres d'amortissement.

Le fonctionnement en mode asynchrone étant dégradé par rapport à un fonctionnement en mode synchrone, ces solutions connues ne sont pas adaptées dans le cas de S/G associés à des turbomachines demandant une puissance élevée au démarrage, en particulier dans le cas de turbomachines de moteurs aéronautiques de propulsion.

En outre, ces solutions connues nécessitent l'insertion d'un interrupteur commandable en parallèle ou en série avec l'inducteur rotorique de la machine électrique principale, ce qui est un élément fortement défiabilisant.

Par ailleurs, il est bien connu depuis longtemps de faire démarrer en mode asynchrone des moteurs électriques synchrones équipés d'inducteurs bobinés ou de barres formant une cage d'écureuil. La phase de démarrage jusqu'à ce que la vitesse de synchronisme soit atteinte est uniquement en mode asynchrone. On pourra se référer aux documents US 3 354 368 et GB 175 084.

### Objet et résumé de l'invention

L'invention a pour but de fournir un démarreur-générateur de turbomachine ne présentant pas les inconvénients précités et propose à cet effet, selon un de ses aspects, un démarreur-générateur selon la revendication 1.

Un tel agencement est plus particulièrement avantageux dans le cas de démarreurs-générateurs associés à des turbomachines de moteurs de propulsion aéronautiques, le basculement en mode moteur synchrone étant commandé pour un seuil de vitesse au-delà duquel le fonctionnement en mode moteur asynchrone ne permet plus de garantir la fourniture d'un couple de démarrage suffisant pour de telles turbomachines. L'invention est aussi remarquable en ce que l'agencement des barres d'amortissement est conçu pour favoriser le fonctionnement en moteur asynchrone, sans nécessiter de configurer l'inducteur rotorique en court-circuit au démarrage.

Avantageusement, les barres d'amortissement sont réparties angulairement de façon sensiblement uniforme, le pas angulaire P entre deux barres d'amortissement voisines étant tel que 0,8 Pm < P < 1,2 Pm, de préférence tel que 0,9 Pm < P< 1,1 Pm, où Pm est la valeur moyenne du pas angulaire dans l'ensemble des barres d'amortissement. La disposition sensiblement régulière des barres d'amortissement permet non seulement de favoriser le fonctionnement en mode moteur asynchrone mais aussi d'éviter d'importantes ondulations du couple.

Selon une particularité du démarreur-générateur, celui-ci comporte un capteur de position angulaire relié au deuxième circuit régulateur de démarrage pour fournir à celui-ci une information représentative de la position angulaire du rotor de la machine électrique principale.

De préférence aussi, chaque circuit régulateur de démarrage est relié à des capteurs fournissant des informations représentatives des intensités des courants dans les enroulements statoriques de la machine électrique principale, et chaque circuit régulateur de démarrage comprend une unité de calcul pour évaluer le couple réel de démarrage fourni à partir des informations représentatives des intensités des courants dans les enroulements statoriques et pour produire des signaux de commande de l'onduleur afin d'asservir le couple réel de démarrage fourni à une valeur de consigne de couple pré-enregistrée.

En outre, l'unité de régulation démarrage peut être reliée à un capteur fournissant une information représentative de la vitesse de rotation de l'arbre et comprendre un circuit pour fournir au premier et deuxième circuit régulateur de démarrage une valeur de consigne de couple à partir d'un profil pré-enregistré de variation du couple de démarrage en fonction de la vitesse de rotation de l'arbre.

Selon un autre de ses aspects, l'invention vise aussi une turbomachine équipée d'un démarreur-générateur tel que défini ci-avant.

Selon encore un autre de ses aspects, l'invention vise un procédé de commande d'un démarreur-générateur de turbomachine lors d'une phase de démarrage de la turbomachine, procédé tel que défini par la revendication 7.

Avantageusement, on utilise une machine électrique principale dont le rotor comporte des barres d'amortissement qui sont réparties angulairement de façon sensiblement uniforme avec un pas angulaire P entre deux barres d'amortissement voisines tel que 0,8 Pm <P <1,2 Pm, de préférence 0,9 Pm < P < 1,1 Pm où Pm est la valeur moyenne du pas angulaire dans l'ensemble des barres d'amortissement.

Lors de la phase de démarrage, le démarreur-générateur est de préférence commandé pour asservir le couple fourni par la machine électrique principale à une valeur de consigne prédéterminée fonction de la vitesse de rotation de l'arbre.

### Brève description des dessins

L'invention sera mieux comprise à la lecture de la description faite ci-après, à titre indicatif mais non limitatif, en référence aux dessins annexés, sur lesquels :
- la figure 1 est un schéma très simplifié d'un moteur d'avion à turbine à gaz ;
- la figure 2 montre de façon très schématique l'agencement d'un démarreur-générateur selon un mode de réalisation de l'invention ;
- la figure 3 est une vue schématique en coupe radiale d'un mode de réalisation d'un rotor de machine électrique principale dans le démarreur-générateur de la figure 2 ;
- la figure 4 est une vue schématique en bout du rotor de la figure 3 ;

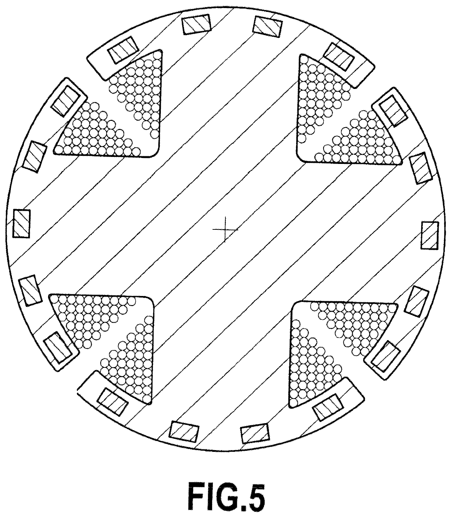

- la figure 5 est une vue schématique en coupe radiale d'un autre mode de réalisation d'un rotor de machine électrique principale dans le démarreur-générateur de la figure 2 ; et
- la figure 6 est un schéma d'un mode de réalisation d'une unité de régulation démarrage du démarreur-générateur de la figure 2.

### Description détaillée de modes de réalisation

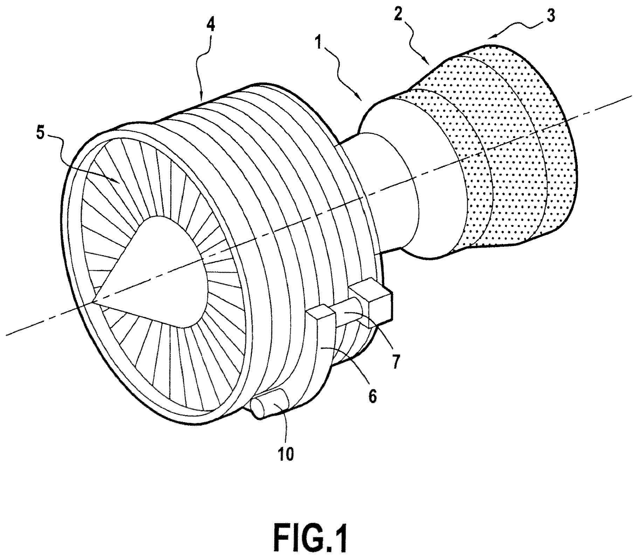

L'invention sera principalement décrite ci-après dans le cadre de son application à un démarreur-générateur de turbomachine de moteur de propulsion pour avion telle que par exemple celle montrée de façon très simplifiée sur la figure 1.

L'invention est toutefois applicable à des démarreurs-générateurs d'autres turbomachines, notamment des turbines d'hélicoptères, des turbines industrielles ou des turbines de groupes auxiliaires de puissance (APU).

La turbomachine de la figure 1 comprend une chambre de combustion 1, les gaz de combustion issus de la chambre 1 entraînant une turbine haute pression (HP) 2 et une turbine basse pression (BP) 3. La turbine 2 est couplée par un arbre à un compresseur HP 4 alimentant la chambre de combustion 1 en air sous pression tandis que la turbine 3 est couplée par un autre arbre à une soufflante 5 en entrée du moteur.

Une boîte de transmission 6, ou boîte de relais d'accessoires, est reliée par une prise de puissance mécanique 7 à un arbre de turbine et comprend un ensemble de pignons pour l'entraînement de différents équipements, notamment des pompes et au moins un démarreur-générateur électrique (ci-après "S/G") 10.

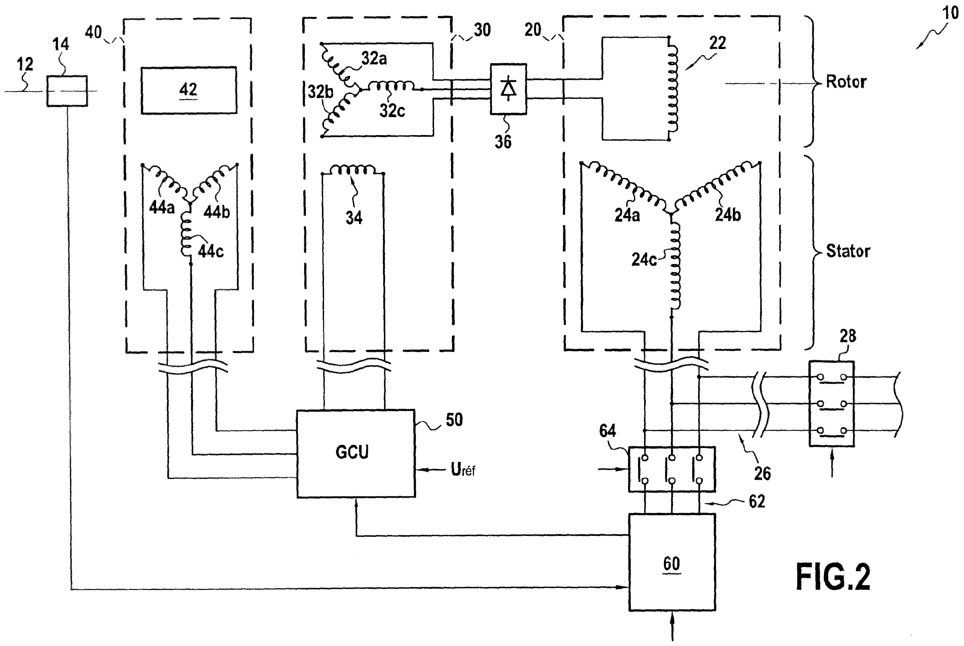

La figure 2 montre schématiquement un S/G 10 à trois étages, à savoir une machine électrique principale 20, une excitatrice 30 et une génératrice auxiliaire 40 dont les rotors sont montés sur un arbre commun 12 relié mécaniquement à un arbre de turbomachine de moteur d'avion tel que celui de la figure 1.

La machine électrique principale 20 comprend, au rotor, un inducteur rotorique bobiné 22 et, au stator des enroulements statoriques 24a, 24b, 24c qui peuvent être connectés en étoile. L'excitatrice 30 comprend, au stator, un enroulement inducteur 34 et, au rotor, des enroulements rotoriques 32a, 32b, 32c qui peuvent être connectés en étoile. Les courants alternatifs développés au rotor de l'excitatrice 30 sont redressés par un redresseur tournant 36, tel qu'un pont de diodes tournant, pour alimenter l'inducteur rotorique de la machine électrique principale. La génératrice auxiliaire 40 est par exemple une génératrice synchrone à aimants permanents avec un rotor 42 portant des aimants permanents et des enroulements statoriques 44a, 44b, 44c qui peuvent être connectés en étoile.

En mode générateur, la turbomachine ayant été démarrée et allumée, la machine électrique principale 20 constitue une génératrice électrique synchrone qui délivre au stator une tension électrique triphasée (dans cet exemple) sur une ligne d'alimentation 26 sur laquelle est inséré un commutateur de ligne 28. La ligne d'alimentation 26 achemine la tension électrique vers le réseau de bord (non représenté) de l'avion. La régulation de la tension produite est assurée par une unité de régulation générateur ou GCU 50 qui commande l'alimentation de l'inducteur 34 de l'excitatrice en courant continu pour asservir la tension U_{réf} en un point de référence sur la ligne 26 à une valeur de consigne. A cet effet, une information représentative de la valeur instantanée de la tension U_{réf} est fournie à la GCU 50. L'énergie électrique nécessaire à l'alimentation de l'excitatrice 30 est fournie par la génératrice auxiliaire 40, la GCU 50 recevant et redressant la tension alternative fournie au stator de la génératrice auxiliaire 40. En variante, l'alimentation de la GCU 50 pourrait être dérivée du réseau électrique de bord de l'avion. Un tel fonctionnement d'un S/G en mode générateur est bien connu.

En mode démarreur, la machine électrique principale 20 constitue un moteur électrique qui fournit le couple nécessaire à la mise en rotation de la turbomachine. Pendant la phase de démarrage, les enroulements statoriques 24a, 24b, 24c de la machine électrique principale 20 sont alimentés en courant alternatif au moyen d'une unité de régulation démarrage 60 comprenant un onduleur qui est relié aux enroulements 24a, 24b, 24c par une ligne 62 sur laquelle est inséré un contacteur de démarrage 64.

Lors d'une première étape de la phase de démarrage, la turbomachine étant initialement à l'arrêt, la machine électrique 20 fonctionne en mode moteur asynchrone en utilisant des barres d'amortissement associées à l'inducteur rotorique 22 de la machine électrique principale 20. De façon bien connue, en fonctionnement en mode génératrice synchrone, ces barres d'amortissement ont pour fonctions de contribuer à la tenue mécanique du rotor, d'améliorer le facteur de forme sinusoïdal en uniformisant le champ magnétique dans l'entrefer, de réduire les conséquences de charges triphasées mal réparties et d'amortir des oscillations durant des transitoires de charges.

Selon une caractéristique de l'invention, les barres d'amortissement sont agencées en priorité pour favoriser la génération d'un couple de démarrage élevé.

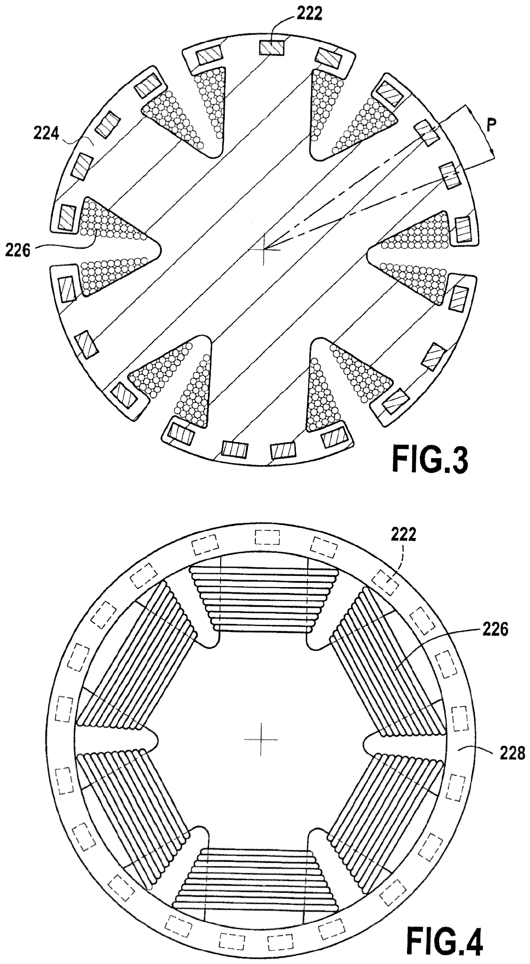

Comme le montrent les figures 3 et 4, les barres d'amortissement 222 sont avantageusement réparties angulairement de façon sensiblement régulière et sont reliées électriquement les unes aux autres à leurs extrémités pour former une "cage d'écureuil". Dans l'exemple illustré, le rotor de la machine électrique principal est à pôles saillants 224 qui portent les enroulements rotoriques 226 de l'inducteur 22. Les barres 222 s'étendant parallèlement à l'axe du rotor au voisinage de l'extrémité des pôles 224, les axes des barres 222 étant situés sur une même surface cylindrique. A une de leurs extrémités axiales, les barres 222 sont réunies par une couronne 228 (figure 4). A leurs autres extrémités axiales, les barres sont réunies de la même façon par une autre couronne similaire. Par répartition angulaire sensiblement régulière des barres 222, on entend ici une disposition telle que le pas angulaire P entre deux barres satisfait la relation 0,8 Pm < P < 1,2 Pm, de préférence 0,9 Pm < P < 1,1 Pm, où Pm est le pas angulaire moyen pour l'ensemble des barres.

Outre un fonctionnement optimisé en mode moteur asynchrone, la répartition sensiblement régulière des barres d'amortissement présente l'avantage d'éviter d'importantes ondulations du couple telles que résultant d'une répartition très irrégulière.

La disposition sensiblement régulière des barres impose toutefois une distance relativement réduite entre pôles 224 à leurs extrémités, distance nécessairement inférieure au pas P. Il peut en résulter un flux de fuite entre pôles, mais relativement limité et peu pénalisant pour le fonctionnement de la machine électrique principale 20 en mode synchrone. Dans l'exemple illustré par la figure 3, les pôles 224 sont au nombre de 6 et le nombre de barres est égal à 21 en alternant 3 barres et 4 barres par pôle. On notera que disposition angulaire des barres n'est pas nécessairement symétrique par rapport à un axe passant par ce centre des pôles.

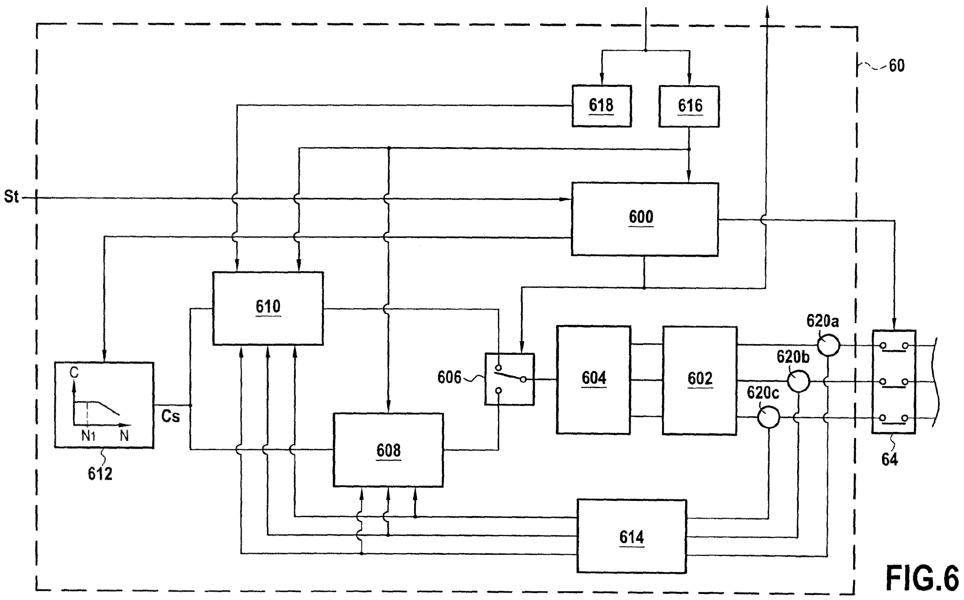

On pourrait adopter une disposition différente, par exemple avec un rotor à 4 pôles saillants et un nombre de barres égal à 18 en alternant 4 barres et 5 barres par pôle, comme montré sur la figure 6.

Bien entendu, on pourrait adopter un nombre de barres différent de celui des exemples illustrés, notamment selon l'application particulière envisagée.

Pour avoir un couple élevé en mode moteur asynchrone en utilisant la cage 220, la résistance électrique de la cage doit de préférence être minimisée. En effet, si la résistance électrique de la cage formée par les barres 222 et les couronnes 228 est trop élevée, il pourra être impossible d'induire un courant suffisant dans les barres pour atteindre le niveau de couple voulu avec le niveau disponible de tension d'alimentation de l'onduleur de l'unité de régulation démarrage. De plus, une résistance trop élevée induit des pertes par effet Joule importantes qui sont pénalisantes du point de vue du rendement et du point de vue thermique. Les barres d'amortissement 222 et les couronnes 228 les reliant à leurs extrémités sont alors de préférence réalisées en matériau bon conducteur de l'électricité, par exemple en cuivre et avec une section supérieure à celle simplement requise pour les barres pour la seule fonction d'amortissement.

Il pourra en outre être avantageux de conférer aux barres 228 une section rectangulaire plutôt que circulaire, à section égale, pour pénaliser le moins possible la section magnétique de passage du flux.

On notera que la totalité du couple de démarrage en mode moteur asynchrone est produite grâce à la cage 220, sans contribution des enroulements rotoriques qui ne sont pas refermés sur eux-mêmes.

Lorsque la vitesse de rotation de l'arbre 12 atteint une valeur de seuil telle que la fourniture du couple requis ne peut plus être garantie par la machine électrique principale fonctionnant en mode moteur asynchrone, une commutation de mode moteur asynchrone en mode moteur synchrone est commandée pour effectuer la deuxième et dernière étape de la phase de démarrage. L'excitatrice étant en rotation, un courant continu est injecté par le GCU 50 sur l'inducteur 34 de l'excitatrice afin d'alimenter l'inducteur bobiné 22 en courant continu via le redresseur tournant 36. Dans le même temps, les enroulements statoriques 24a, 24b, 24c de la machine électrique principale sont alimentés en courant alternatif au moyen de l'unité de régulation démarrage 60 tout en assurant une orientation optimale du flux statorique par rapport à la position du rotor.

De façon classique, lorsque le couple produit par la turbomachine est suffisant pour ne plus avoir besoin du S/G, le contacteur de démarrage 64 est ouvert, et la fermeture du contacteur de ligne 28 peut être commandée par la GCU 50 lorsque la vitesse du S/G, et donc sa fréquence, sont suffisantes.

Un mode particulier de réalisation de l'unité de régulation démarrage 60 sera maintenant décrit en référence à la figure 6.

Les tensions alimentant les enroulements statoriques de la machine électrique principale sont produites par un onduleur de démarrage 602 qui est piloté en tension et en fréquence au moyen d'un circuit de commande d'onduleur 604. L'énergie électrique nécessaire à la génération des tensions voulues par l'onduleur 602 et au fonctionnement des différents composants de l'unité de régulation démarreur 60 est fournie par une ligne d'alimentation (non représentée) à partir d'un réseau de bord de l'avion alimenté par un APU ou un groupe générateur au sol.

Selon la position d'un commutateur de mode moteur 606, le circuit 604 de commande d'onduleur est relié en entrée à un circuit régulateur de démarrage en mode asynchrone 608 ou à un circuit régulateur de démarrage en mode synchrone 610.

Un circuit 614 a des entrées reliées à des capteurs de courant 620a, 620b, 620c insérés sur les conducteurs de la ligne 62 pour fournir aux circuits 608 et 610 des informations représentatives des intensités des courants de phase dans les enroulements statoriques de la machine électrique principale.

Un circuit 616 a une entrée reliée à un capteur 14 (figure 2) monté sur l'arbre 12 du S/G pour fournir aux circuits 608 et 610 une information représentative de la vitesse de rotation de l'arbre 12. Un circuit 618 a une entrée également reliée au capteur 14 pour fournir au circuit 610 une information représentative de la position angulaire de l'arbre 12, c'est-à-dire représentative de la position angulaire du rotor de la machine électrique principale 20. Le capteur 14 est par exemple un capteur de position angulaire permettant de dériver des signaux du capteur une information de position et une information de vitesse, un tel capteur étant bien connu en soi.

Le capteur de position angulaire peut être omis lorsque cette position peut être calculée à partir de la mesure de grandeurs électriques qui en dépendent.

Le fonctionnement de l'unité de régulation démarrage 60 est le suivant.

En réponse à un ordre de démarrage St, une unité de commande numérique 600 commande la fermeture du contacteur 64 et le basculement du commutateur de mode moteur 606 pour relier le circuit régulateur de démarrage en mode asynchrone 608 au circuit 604 de commande d'onduleur.

Comme montré schématiquement sur la figure 6, une table 612 contient des informations représentant la valeur de consigne du couple de démarrage C en fonction de la vitesse de rotation N de l'arbre du S/G. La valeur requise du couple est ici sensiblement constante à partir du début de la phase de démarrage et décroît en fin de celle-ci. L'unité de commande numérique 600 reçoit du circuit 616 l'information représentative de la vitesse de rotation N et commande la table 612 en lecture pour fournir au circuit 608 une valeur de consigne de couple Cs. En outre, le circuit 608 comprend une unité de calcul pour calculer notamment une grandeur représentative du couple réel exercé par la machine électrique principale et fournir au circuit de commande de tension et de fréquence d'onduleur 604 des informations de consigne de tension et de fréquence afin d'asservir notamment la valeur du couple réel à la valeur de consigne Cs en fonction de la vitesse.

A cet effet, à partir des valeurs des intensités des courants de phase dans les enroulements statoriques, on peut calculer le courant de couple Iq et le courant de flux Id de la machine électrique, de façon bien connue en soi. Le courant Iq qui est l'image du couple réel est asservi à une valeur de consigne correspondant au couple de consigne Cs. Le courant de flux Id est l'image du flux rotorique et peut être asservi à sa valeur maximale avant saturation.

Lorsque la vitesse augmente, le couple maximal que peut fournir une machine fonctionnant en mode moteur asynchrone décroît à partir d'une certaine vitesse. Il existe alors une vitesse de rotation N₁ à partir de laquelle la machine ne peut fournir le couple de consigne requis. Cette valeur N₁ dépend des caractéristiques de la machine.

Lorsque la valeur N₁ est atteinte, l'unité de commande numérique 600 commande le basculement du commutateur de mode moteur 606 pour relier le circuit régulateur de démarrage en mode synchrone 610 au circuit 604 de commande d'onduleur et commande le GCU 50 pour alimenter l'enroulement statorique de l'excitatrice 30 en courant continu. Comme précédemment, l'unité de commande numérique 600 commande la table 612 pour fournir la valeur de consigne de couple Cs au circuit 610 en fonction de la vitesse.

De même que le circuit 608, le circuit régulateur de démarrage en mode synchrone comprend des moyens pour calculer le couple réel. Le circuit 610 fournit au circuit de commande d'onduleur 604 des informations de consigne de tension et de fréquence pour asservir le couple réel à la valeur de consigne Cs en fonction de la vitesse, tout en assurant une position optimale du flux statorique par rapport à la position angulaire du rotor. A cet effet, comme précédemment, les courants Iq et Id sont calculés. Le courant Iq est asservi à une valeur de consigne correspondant au couple de consigne Cs. Le courant de flux peut être asservi à une valeur nulle. Du côté de l'excitatrice, le stator est alimenté avec un courant tel que le niveau de flux inducteur est maximal au niveau de la machine électrique principale, afin de réduire autant que possible le courant statorique de la machine électrique principale pour une couple donné à fournir. Lorsque la vitesse augmente, le courant d'inducteur de l'excitatrice est diminué pour réduire le flux dans la machine électrique principale et éviter que la force électromotrice devienne trop importante par rapport à la tension d'alimentation de l'onduleur 602.

L'ouverture du contacteur de démarrage 64 est commandée par l'unité de commande 600 lorsque la vitesse de rotation atteint une valeur prédéterminée.

## Revendications

1. Démarreur-générateur de turbomachine comprenant :
- une machine électrique principale (20) conçue pour fonctionner en mode génératrice électrique synchrone après démarrage de la turbomachine et pour fonctionner en mode moteur électrique lors d'une phase de démarrage de la turbomachine, la machine électrique principale ayant un stator portant des enroulements statoriques (24a, 24b, 24c) et un rotor avec un inducteur rotorique bobiné (22) et des barres d'amortissement (222) formant une cage en étant reliées électriquement les unes aux autres à leurs extrémités,
- une excitatrice (30) ayant un inducteur statorique (34) et un rotor avec des enroulements rotoriques (32a, 32b, 32c) reliés à l'inducteur rotorique de la machine électrique principale via un redresseur tournant (36), les rotors de la machine électrique principale et de l'excitatrice étant montés sur un arbre commun (12) destiné à être couplé mécaniquement à un arbre de la turbomachine,
- une unité de régulation générateur (50) reliée à l'inducteur statorique de l'excitatrice pour fournir un courant continu à l'inducteur statorique de l'excitatrice lorsque la machine électrique principale fonctionne en mode génératrice électrique synchrone, et
- une unité de régulation démarreur (60) reliée aux enroulements statoriques de la machine électrique principale via un contacteur de démarrage (64) pour fournir un courant alternatif aux enroulements statoriques de la machine électrique principale lorsque celle-ci fonctionne en mode moteur électrique,
**caractérisé en ce que** :
- l'unité de régulation démarreur (60) comporte un premier circuit régulateur de démarrage en mode moteur asynchrone (608), un deuxième circuit régulateur de démarrage en mode moteur synchrone (610), un onduleur (602) pour fournir le courant alternatif aux enroulements statoriques de la machine électrique principale via le contacteur de démarrage (64), un commutateur de mode moteur (606) pour piloter l'onduleur (602) par le premier ou le deuxième circuit régulateur de démarrage, et un circuit (600) de commande du commutateur de mode moteur (606) et du contacteur de démarrage (64), le circuit de commande (600) recevant une information représentative de la vitesse de rotation de l'arbre (12) et étant agencé pour :
• fermer le contacteur de démarrage (64) en réponse à un ordre de démarrage,
• débuter le démarrage de la turbomachine avec la machine électrique principale (20) fonctionnant en mode moteur asynchrone au moyen du circuit régulateur de démarrage en mode moteur asynchrone (608),
• poursuivre le démarrage avec la machine électrique principale (20) fonctionnant en mode moteur synchrone au moyen du circuit régulateur de démarrage en mode synchrone (610), le passage du mode moteur asynchrone en mode moteur synchrone étant commandé lorsque la vitesse de rotation de l'arbre dépasse un seuil prédéterminé, et
• après démarrage et allumage de la turbomachine, ouvrir le contacteur de démarrage (64) pour permettre le fonctionnement de la machine électrique (20) en mode génératrice synchrone, et
- la cage formée par les barres d'amortissement (222) est configurée pour permettre un démarrage en mode moteur asynchrone sans contribution par mise en court-circuit de l'inducteur rotorique de la machine électrique principale à la génération du couple de démarrage.

2. Démarreur-générateur selon la revendication 1, **caractérisé en ce que** les barres d'amortissement (222) sont réparties angulairement de façon sensiblement uniforme, le pas angulaire P entre deux barres d'amortissement voisines étant tel que 0,8 Pm < P < 1,2 Pm, où Pm est la valeur moyenne du pas angulaire dans l'ensemble des barres d'amortissement.

3. Démarreur-générateur selon l'une quelconque des revendications 1 et 2, **caractérisé en ce qu'**il comporte un capteur de position angulaire (14) relié au deuxième circuit régulateur de démarrage (610) pour fournir à celui-ci une information représentative de la position angulaire du rotor de la machine électrique principale.

4. Démarreur-générateur selon l'une quelconque des revendications 1 à 3, **caractérisé en ce que** chaque circuit régulateur de démarrage (608, 610) est relié à des capteurs (620a, 620b, 620c) fournissant des informations représentatives des intensités des courants dans les enroulements statoriques de la machine électrique principale, et chaque circuit régulateur de démarrage comprend une unité de calcul pour évaluer le couple réel de démarrage fourni à partir des informations représentatives des intensités des courants dans les enroulements statoriques et pour produire des signaux de commande de l'onduleur (602) afin d'asservir le couple réel de démarrage fourni à une valeur de consigne de couple pré-enregistrée.

5. Démarreur-générateur selon la revendication 4, **caractérisé en ce que** l'unité de régulation démarreur (60) est reliée à un capteur (14) fournissant une information représentative de la vitesse de rotation de l'arbre et comprend un circuit pour fournir au premier et deuxième circuit régulateur de démarrage (608, 610) une valeur de consigne de couple à partir d'un profil pré-enregistré de variation du couple de démarrage en fonction de la vitesse de rotation de l'arbre.

6. Turbomachine équipée d'un démarreur-générateur selon l'une quelconque des revendications 1 à 5.

7. Procédé de commande d'un démarreur-générateur de turbomachine lors d'une phase de démarrage de la turbomachine, le démarreur-générateur comprenant : une machine électrique principale ayant un stator portant des enroulements statoriques et un rotor avec un inducteur rotorique bobiné et des barres d'amortissement (222) formant une cage en étant reliées électriquement les unes aux autres à leurs extrémités, et une excitatrice (30) ayant un inducteur statorique et un rotor avec des enroulements rotoriques reliés à l'inducteur rotorique de la machine électrique principale via un redresseur tournant (36), les rotors de la machine électrique principale et de l'excitatrice étant montés sur un arbre commun (12) relié mécaniquement à un arbre de la turbomachine,
**caractérisé en ce que** :
- la turbomachine étant initialement à l'arrêt, la machine électrique principale (20) est commandée en mode moteur asynchrone en injectant un courant alternatif dans les enroulements statoriques de la machine électrique principale, un couple de démarrage étant engendré au moyen des barres d'amortissement (222) sans contribution par mise en court-circuit de l'inducteur rotorique de la machine électrique principale à la génération du couple de démarrage,
- la machine électrique principale (20) est ensuite commandée en mode moteur synchrone en injectant un courant alternatif dans les enroulements statoriques de la machine électrique principale tout en alimentant l'inducteur rotorique de la machine électrique principale en courant continu par injection de courant continu dans l'inducteur statorique de l'excitatrice (30),
le passage du mode moteur asynchrone au mode moteur synchrone étant commandé lorsque la vitesse de rotation de l'arbre atteint une valeur prédéterminée, et, ensuite
- la turbomachine avant été démarrée et allumée, la machine électrique principale (20) est commandée en mode génératrice synchrone, l'injection de courant alternatif dans ses enroulements statoriques étant interrompue.

8. Procédé selon la revendication 7, l'on utilise une machine électrique principale dans laquelle les barres d'amortissement (222) sont réparties angulairement de façon sensiblement uniforme avec un pas angulaire P entre deux barres d'amortissement voisines tel que 0,8 Pm < P < 1,2 Pm où Pm est la valeur moyenne du pas angulaire dans l'ensemble des barres d'amortissement,

9. Procédé selon l'une quelconque des revendications 7 et 8, **caractérisé en ce que**, lors de la phase de démarrage, le démarreur-générateur est commandé pour asservir le couple fourni par la machine électrique principale à une valeur de consigne prédéterminée fonction de la vitesse de rotation de l'arbre.

## Patentansprüche

1. Starter-Generator einer Turbomaschine, umfassend:
- eine elektrische Hauptmaschine (20), die dazu ausgelegt ist, nach dem Start der Turbomaschine im synchronen Stromerzeuger-Modus zu arbeiten und während einer Startphase der Turbomaschine im Elektromotor-Modus zu arbeiten, wobei die elektrische Hauptmaschine einen Stator, welcher Statorwicklungen (24a, 24b, 24c) trägt, und einen Rotor mit einem gewickelten Rotorinduktor (22) und Dämpfungsstäben (222) aufweist, welche an ihren Enden elektrisch miteinander verbunden einen Käfig bilden,
- eine Erregermaschine (30) mit einem Statorinduktor (34) und einem Rotor mit Rotorwicklungen (32a, 32b, 32c), die über einen rotierenden Gleichrichter (36) mit dem Rotorinduktor der elektrischen Hauptmaschine verbunden sind, wobei die Rotoren der elektrischen Hauptmaschine und der Erregermaschine an einer gemeinsamen Welle (12) angebracht sind, die dazu bestimmt ist, mit einer Welle der Turbomaschine mechanisch gekoppelt zu werden,
- eine Generatorregelungseinheit (50), die mit dem Statorinduktor der Erregermaschine verbunden ist, um dem Statorinduktor der Erregermaschine einen Gleichstrom zu liefern, wenn die elektrische Hauptmaschine im synchronen Stromerzeuger-Modus arbeitet, und
- eine Starterregelungseinheit (60), die über ein Startschütz (64) mit den Statorwicklungen der elektrischen Hauptmaschine verbunden ist, um den Statorwicklungen der elektrischen Hauptmaschine einen Wechselstrom zu liefern, wenn diese im Elektromotor-Modus arbeitet,
**dadurch gekennzeichnet, dass**:
- die Starterregelungseinheit (60) eine erste Asynchronmotormodus-Startregelungsschaltung (608), eine zweite Synchronmotormodus-Startregelungsschaltung (610), einen Wechselrichter (602), um den Statorwicklungen der elektrischen Hauptmaschine den Wechselstrom über den Startschütz (64) zu liefern, einen Motormodus-Umschalter (606), um den Wechselrichter (602) über die erste oder die zweite Startregelungsschaltung zu steuern, sowie eine Schaltung (600) zur Steuerung des Motormodus-Umschalters (606) und des Startschützes (64) umfasst, wobei die Steuerschaltung (600) eine Information empfängt, die für die Drehzahl der Welle (12) repräsentativ ist, und angeordnet ist, um:
• den Startschütz (64) als Reaktion auf einen Startbefehl zu schließen,
• das Starten der Turbomaschine mit der im Asynchronmotor-Modus arbeitenden elektrischen Hauptmaschine (20) mittels der Asynchronmotormodus-Startregelungsschaltung (608) zu beginnen,
• das Starten mit der im Synchronmotor-Modus arbeitenden elektrischen Hauptmaschine (20) mittels der Synchronmodus-Startregelungsschaltung (610) fortzusetzen, wobei der Übergang von dem Asynchronmotor-Modus zu dem Synchronmotor-Modus gesteuert wird, wenn die Drehzahl der Welle einen vorbestimmten Schwellwert überschreitet, und
• nach dem Starten und Zünden der Turbomaschine, das Startschütz (64) zu öffnen, um den Betrieb der elektrischen Maschine (20) im Synchrongenerator-Modus zu ermöglichen, und
- der durch die Dämpfungsstäbe (222) gebildete Käfig dazu ausgelegt ist, ein Starten im Asynchronmotor-Modus ohne Beitrag durch Kurzschließen des Rotorinduktors der elektrischen Hauptmaschine zur Erzeugung des Startdrehmoments zu ermöglichen.

2. Starter-Generator nach Anspruch 1, **dadurch gekennzeichnet, dass** die Dämpfungsstäbe (222) im Wesentlichen gleichmäßig winkelig verteilt sind, wobei die Winkelteilung P zwischen zwei benachbarten Dämpfungsstäben derart ist, dass 0,8 Pm < P < 1,2 Pm, wobei Pm der mittlere Wert der Winkelteilung bei allen Dämpfungsstäben ist.

3. Starter-Generator nach einem der Ansprüche 1 und 2, **dadurch gekennzeichnet, dass** er einen Winkelpositionssensor (14) umfasst, der mit der zweiten Startregelungsschaltung (610) verbunden ist, um ihm eine Information zu liefern, die für die Winkelposition des Rotors der elektrischen Hauptmaschine repräsentativ ist.

4. Starter-Generator nach einem der Ansprüche 1 bis 3, **dadurch gekennzeichnet, dass** jede Startregelungsschaltung (608, 610) mit Sensoren (620a, 620b, 620c) verbunden ist, die Informationen liefern, welche für die Stromstärken in den Statorwicklungen der elektrischen Hauptmaschine repräsentativ sind, und jede Startregelungsschaltung eine Berechnungseinheit umfasst, um das tatsächliche bereitgestellte Startdrehmoment anhand der für die Stromstärken in den Statorwicklungen repräsentativen Informationen zu bewerten und um Steuersignale des Wechselrichters (602) zu erzeugen, um das tatsächliche bereitgestellte Startdrehmoment einem zuvor aufgezeichneten Drehmomentsollwert nachzuführen.

5. Starter-Generator nach Anspruch 4, **dadurch gekennzeichnet, dass** die Starterregelungseinheit (60) mit einem Sensor (14) verbunden ist, der eine für die Drehzahl der Welle repräsentative Information liefert, und eine Schaltung umfasst, um der ersten und der zweiten Startregelungsschaltung (608, 610) einen Drehmomentsollwert anhand eines zuvor aufgezeichneten Profils der Variation des Startdrehmoments in Abhängigkeit von der Drehzahl der Welle zu liefern.

6. Turbomaschine, die mit einem Starter-Generator nach einem der Ansprüche 1 bis 5 ausgerüstet ist.

7. Verfahren zum Steuern eines Starter-Generators einer Turbomaschine während einer Startphase der Turbomaschine, wobei der Starter-Generator umfasst: eine elektrische Hauptmaschine mit einem Stator, der Statorwicklungen trägt, und einem Rotor mit einem gewickelten Rotorinduktor und Dämpfungsstäben (222), die an ihren Enden elektrisch miteinander verbunden einen Käfig bilden, sowie eine Erregermaschine (30) mit einem Statorinduktor und einem Rotor mit Rotorwicklungen, die über einen rotierenden Gleichrichter (36) mit dem Rotorinduktor der elektrischen Hauptmaschine verbunden sind, wobei die Rotoren der elektrischen Hauptmaschine und der Erregermaschine an einer gemeinsamen Welle (12) angebracht sind, die mit einer Welle der Turbomaschine mechanisch verbunden ist,
**dadurch gekennzeichnet, dass**:
- wenn die Turbomaschine anfänglich im Stillstand ist, die elektrische Hauptmaschine (20) durch Einspeisen eines Wechselstroms in die Statorwicklungen der elektrischen Hauptmaschine im Asynchronmotor-Modus gesteuert wird, wobei ein Startdrehmoment mittels der Dämpfungsstäbe (222) ohne Beitrag durch Kurzschließen des Rotorinduktors der elektrischen Hauptmaschine zur Erzeugung des Startdrehmoments erzeugt wird,
- die elektrische Hauptmaschine (20) anschließend durch Einspeisen eines Wechselstroms in die Statorwicklungen der elektrischen Hauptmaschine im Synchronmotor-Modus gesteuert wird und gleichzeitig der Rotorinduktor der elektrischen Hauptmaschine durch Einspeisen von Gleichstrom in den Statorinduktor der Erregermaschine (30) mit Gleichstrom gespeist wird,
- wobei der Übergang von dem Asynchronmotor-Modus zu dem Synchronmotor-Modus gesteuert wird, wenn die Drehzahl der Welle einen vorbestimmten Wert erreicht, und anschließend,
- wenn die Turbomaschine gestartet und gezündet worden ist, die elektrische Hauptmaschine (20) im Synchrongenerator-Modus gesteuert wird, wobei das Einspeisen von Wechselstrom in ihre Statorwicklungen unterbrochen wird.

8. Verfahren nach Anspruch 7, **dadurch gekennzeichnet, dass** eine elektrische Hauptmaschine verwendet wird, bei der die Dämpfungsstäbe (222) im Wesentlichen gleichmäßig winkelig verteilt sind, mit einer Winkelteilung P zwischen zwei benachbarten Dämpfungsstäben, die derart ist, dass 0,8 Pm < P < 1,2 Pm, wobei Pm der mittlere Wert der Winkelteilung bei allen Dämpfungsstäben ist.

9. Verfahren nach einem der Ansprüche 7 und 8, **dadurch gekennzeichnet, dass** während der Startphase der Starter-Generator gesteuert wird, um das durch die elektrische Hauptmaschine bereitgestellte Drehmoment einem vorbestimmten Sollwert in Abhängigkeit von der Drehzahl der Welle nachzuführen.

## Claims

1. A turbine engine starter-generator comprising:
• a main electrical machine (20) designed to operate in synchronous electricity generator mode after the turbine engine has started and to operate in electric motor mode during a stage of starting the turbine engine, the main electrical machine having a stator carrying stator windings (24a, 24b, 24c) and a rotor with a wound rotor inducer (22) and damper bars (222) forming a cage by being electrically connected to one another at their ends;
• an exciter (30) having a stator inducer (34) and a rotor with rotor windings (32a, 32b, 32c) connected to the rotor inducer of the main electrical machine via a rotary rectifier (36), the rotors of the main electrical machine and of the exciter being mounted on a common shaft (12) for coupling mechanically to a shaft of the turbine engine;
• a generator regulation unit (50) connected to the stator inducer of the exciter to supply DC to the stator inducer of the exciter while the main electrical machine is operating in synchronous electricity generator mode; and
• a starter regulation unit (60) connected to the stator windings of the main electrical machine via a starting contactor (64) in order to deliver AC to the stator windings of the main electrical machine while it is operating in electric motor mode;
the starter-generator being **characterized in that**:
• the starter regulation unit (60) includes a first regulator circuit (608) for starting in asynchronous motor mode, a second regulator circuit (610) for starting in synchronous motor mode, an inverter (602) for delivering the AC to the stator windings of the main electrical machine via the starting contactor (64), a motor mode switch (606) for causing the inverter (602) to be controlled by the first or the second starting regulator circuit, and a circuit (600) for controlling the motor mode switch (606) and the starting contactor (604), the control circuit (600) receiving an information representative of the speed of rotation of the shaft (12) and being configured for:
• closing the starting contactor (64) in response to a start order;
• beginning the starting of the turbine engine with the main electrical machine (20) operating in asynchronous motor mode according to the regulator circuit (608) for starting in asynchronous motor mode;
• maintaining the starting of the turbine engine with the main electrical machine (20) operating in synchronous motor mode according to the regulator circuit (610) for starting in synchronous motor mode, the change from the asynchronous motor mode to the synchronous motor mode being controlled when the speed of rotation of the shaft exceeds a predetermined threshold; and
• after starting and ignition of the turbine engine, opening the starting contactor (64) for operating the main electrical machine (20) in synchronous generator mode; and
• the cage formed by the damper bars (222) is configured so that it makes starting in asynchronous motor mode possible without bridging the rotor inducer of the main electrical machine for contributing to generating the starting torque.

2. A starter-generator according to claim 1, **characterized in that** the damper bars (222) are angularly distributed in substantially uniform manner, the angular pitch P between two adjacent damper bars being such that 0.8 Pm < P < 1.2 Pm, where Pm is the mean value of the angular pitch of all of the damper bars.

3. A starter-generator according to claim 1 or claim 2, **characterized in that** it includes an angular position sensor (14) connected to the second starting regulator circuit (610) in order to provide it with information representative of the angular position of the rotor of the main electrical machine.

4. A starter-generator according to any one of claims 1 to 3, **characterized in that** each starting regulator circuit (608, 610) is connected to the sensors (620a, 620b, 620c) providing information about the respective magnitudes of the currents in the stator windings of the main electrical machine, and each starting regulator circuit includes a calculation unit for evaluating the real starting torque being delivered from the information representative of the magnitudes of the currents in the stator windings, and in order to produce signals for controlling the inverter (602) in order to servocontrol the real starting torque as delivered to a pre-recorded torque setpoint value.

5. A starter-generator according to claim 4, **characterized in that** the starter regulator unit (60) is connected to a sensor (14) providing information representative of the speed of rotation of the shaft and includes a circuit for delivering to the first and second starting regulator circuits (608, 610) a torque setpoint value taken from a pre-recorded profile of the variation in starting torque as a function of the speed of rotation of the shaft.

6. A turbine engine fitted with a starter-generator according to any one of claims 1 to 5.

7. A method of controlling a turbine engine starter-generator during a starting stage of the turbine engine, the starter-generator comprising: a main electrical machine having a stator carrying stator windings and a rotor with a wound rotor inducer and with damper bars (222) forming a cage by being electrically connected to one another at their ends, and an exciter (30) having a stator inducer and a rotor with rotor windings connected to the rotor inducer of the main electrical machine via a rotary rectifier (36), the rotors of the main electrical machine and of the exciter being mounted on a common shaft (12) mechanically coupled to the shaft of the turbine engine;
the method being **characterized in that**:
• the turbine engine initially being stationary, the main electrical machine (20) is operated in asynchronous motor mode by injecting AC into the stator windings of the main electrical machine, a starting torque being generated by means of the damper bars (222) without bridging the rotor inducer of the main electrical machine for contributing to generating the starting torque;
• the main electrical machine (20) is then operated in synchronous motor mode by injecting AC into the stator windings of the main electrical machine while delivering DC to the rotor inducer of the main electrical machine by injecting DC into the stator inducer of the exciter (30);
• the change from the asynchronous motor mode to the synchronous motor mode being performed when the speed of rotation of the rotor reaches a predetermined value; and then,
the turbine engine being started and ignited, the main electrical machine (20)is operated in synchronous generator mode, said injecting AC into its stator windings being stopped.

8. A method according to claim 7, **characterized in that** a main electrical machine is used in which the damper bars (222) are angularly distributed in substantially uniform manner with an angular pitch P between two adjacent damper bars such that 0.8 Pm < P < 1.2 Pm, where Pm is the mean angular pitch of all of the damper bars.

9. A method according to claim 7 or claim 8, **characterized in that**, during the starting stage, the starter-generator is controlled to servocontrol the torque delivered by the main electrical machine to a setpoint value that is predetermined as a function of the speed of rotation of the shaft.
